# EUROPEAN PATENT APPLICATION

(11) **EP 1 997 731 A2**
(43) Date of publication of application: **03.12.2008**
(21) Application number: 08155724.1
(22) Date of filing: 06.05.2008
(51) Int. Cl.: B64D 15/12, G01P 5/165

(54) **Automated heating system for ports susceptible to icing**

(30) Priority: 08.05.2007 US 745660
(71) Applicant: Honeywell International, Inc., Morristown NJ 07962 (US)
(72) Inventor: Hollingsworth, David R., St. Petersburgh, FL 33709 (US); Dwyer, Michael D., Seminole, FL 33776-1625 (US); Psiropoulos, Dean G., Tarpon Springs, FL 34689 (US)
(74) Representative: Buckley, Guy Julian

(57) **Abstract**

An improved heating system air pressure sensing port. An example aircraft pitot tube (24) heater (38) uses Positive Temperature Coefficient (PTC) switching thermistors (42) arranged to automatically sense the outside air temperature and heat to a design set point temperature. When a high outside air temperature air temperature is experienced, the pitot tube heater (38) will not turn on. The pitot tube heater (38) only turns on below the design set point and will consumes less current than the standard aircraft pitot tube heaters when operating at very cold temperatures. Virtually no current is drawn when the pitot tube increases past the set point, thus reducing the power drain on the aircraft system. The use of multiple thermistors (42) gives the example pitot tube a level of failure redundancy that is not available in current pitot tube heaters.

## Description

### BACKGROUND OF THE INVENTION

Aircraft and various missiles have pitot static systems that collect the RAM air pressure from the forward air speed and feed the pneumatic pressure to the airspeed and altitude measuring devices. These systems are used in air data (instruments) and engine performance systems. When flying in icing conditions the pitot tubes can ice over and block the RAM air pressure. This causes the aircraft to lose the airspeed measuring capability, to lose accurate altitude measuring ability, or to get inaccurate engine performance indications.

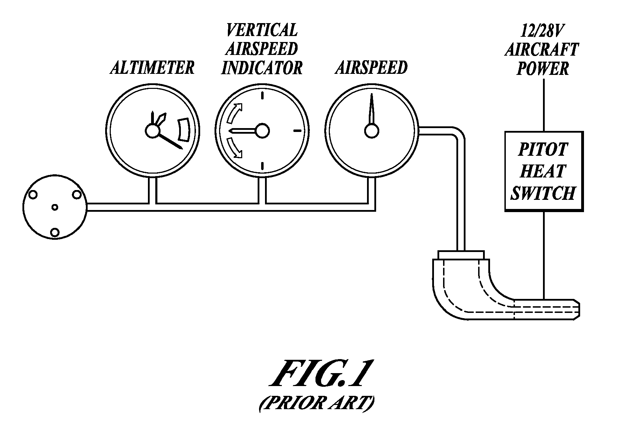

Current aircraft use a coil of resistive wire that is wrapped around the pitot tube and warmed by the aircraft electrical power to keep the pitot vents from icing over - see FIGURE 1. In some applications the pilot is responsible for turning the pitot tube heating system on and off. When outside air temperature is 90° F the pitot will get hot enough to burn one's hand. It will also consume 10+ amps of current creating an unnecessary power drain. Also the heater has no redundancy. If the coil of wire opens anywhere the heater will stop working.

There are other pitot tube heating systems that use temperature sensors and microprocessors for determining when to activate/deactivate the pitot tube heating element. However, these systems are overly complex, thus making them expensive. They are also prone to the failure described above.

Therefore, there exists a need for an improved, low cost pitot tube heating system.

### SUMMARY OF THE INVENTION

The present invention provides an improved heating system air pressure sensing port. An example aircraft pitot tube heater uses Positive Temperature Coefficient (PTC) switching thermistors arranged to automatically sense the outside air temperature and heat to a design set point temperature. The pitot tube heater only turns on below the design set point and consumes less current than the standard aircraft pitot tube heaters when operating at very cold temperatures. Virtually no current is drawn when the pitot tube temperature increases past the set point, thus reducing the power drain on the aircraft system. This heater incorporates redundancy in the form of an array of thermistors. If any one thermistor fails, there will be no overall effect on the operation of the pitot tube heater. The pilot can just leave this heater on all the time and reduce the possibility that under a high work load the pilot forgets to turn on the pitot heater.

### BRIEF DESCRIPTION OF THE DRAWINGS

Preferred and alternative embodiments of the present invention are described in detail below with reference to the following drawings:

FIGURE 1 illustrates a pitot tube heating system formed in accordance with the prior art;

FIGURE 2 illustrates static port and pitot tube heating element system formed in accordance with embodiments of the present invention;

FIGURE 3 illustrates a partial x-ray view of a pitot tube formed in accordance with an embodiment of the present invention; and

FIGURE 4 illustrates temperature versus resistance graph for example thermistors used in the present invention.

### DETAILED DESCRIPTION OF THE PREFERRED EMBODIMENT

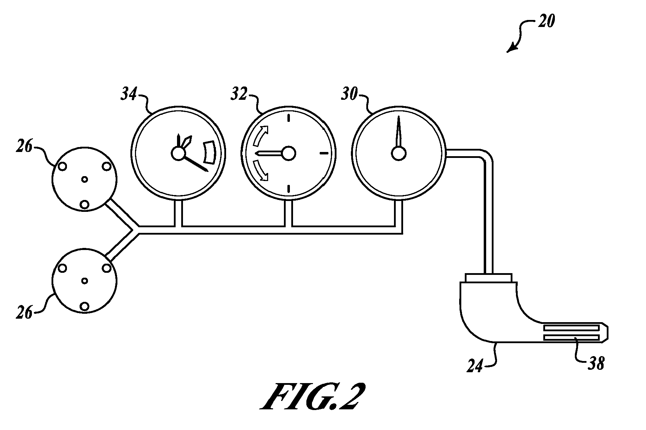

FIGURE 2 illustrates a pitot system 20 formed in accordance with an embodiment of the present invention. The system 20 includes a pitot tube 24 and one or more static ports 26 that are directly connected to air pressure indicators, such as an air speed indicator 30, a vertical speed indicator (VSI) 32, and an altimeter 34. The tube 24, ports 26 and indicators may also be connected to an Air Data Computer (not shown).

In one embodiment, the pitot tube 24 includes an automatic heating element component 38 that is connected up to a power supply (not shown). The heating element component 38 includes one or more thermistors that go to high resistance (essentially shut off) above a preselected set-point temperature. Therefore, when the thermistors are at low resistance they are conducting electricity from the power supply, thereby generating heat and keeping the pitot tube 24 from reaching the freezing point.

In another embodiment, or in conjunction with the thermistors located in the pitot tube 24, similar thermistors are used in the static ports 26 in order to keep them from freezing.

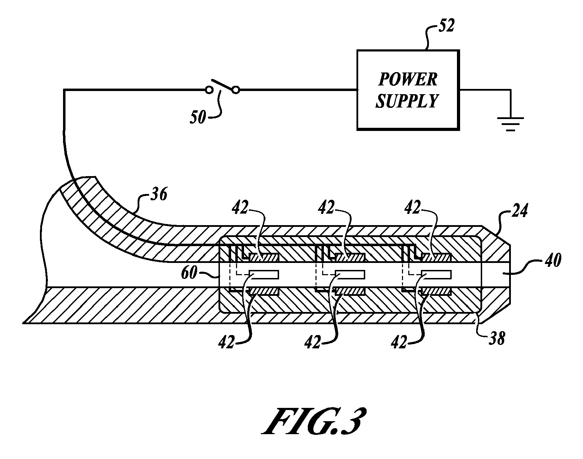

FIGURE 3 illustrates a partial x-ray view of an example pitot tube 24 formed in accordance with an embodiment of the present invention. The pitot tube 24 includes an outer hull 36 and an air receiving tube 40. The outer hull 36 and/or the tube 40 are formed of an electrically conductive material, such as brass or copper. A plurality of thermistors 42 are attached to an outer wall of the tube 40. The thermistors 42 may be attached in any of a number of different ways, such as with a thermally conductive epoxy/adhesive. In one embodiment, twelve thermistors 42 (three annular sets of four) surround the tube 40 along the length of the tube 40. Each thermistor 42 includes two electrical leads. One of the leads is attached to either the tube 40 or the outer hull 36. The tube 40 and/or the outer hull 36 are electrically conductive and are connected to aircraft ground. The other leads of each of the thermistors 42 are connected to an aircraft power supply 52, such as a 12 volt source, via a switch 50. The switch 50 is operable by the flight crew or is the master power-on switch for the aircraft.

In one embodiment, the thermistors 42 are connected in parallel. The parallel connection allows for robust operation, because if one of thermistors 42 should fail the other thermistors 42 continue to operate. Other circuit configurations may be used.

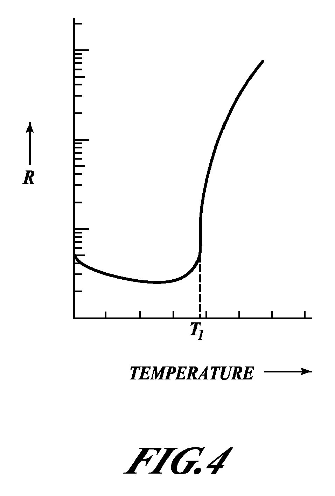

In one embodiment, the thermistors 42 are selected to have a set point of 25° C. Therefore, as the thermistors 42 experience temperatures at or below 25° C, their resistance is low, for example roughly 17 ohms, thereby increasing current flow and causing the thermistors 42 and the tube 24 to heat up. If the temperature experienced by the thermistors 42 is above 25° C, the resistance of the thermistors 42 becomes high, for example roughly 2000 ohms, thereby stopping current from flowing through the thermistors 42. See FIGURE 4 where T1 is 25 degrees C.

The pitot tube 24 also includes a thermal insulator sleeve 60 that surrounds the thermistors 42. Heat produced by the thermistors 42 is maintained close to the inner tube 40 by the thermal insulator sleeve 60. The thermal insulator sleeve 60 is formed of any of a number of insulating materials. In one embodiment, the thermal insulator sleeve 60 is a Teflon outer covering that is molded to the outside of the pitot tube 24. Ice will shed off easily of the Teflon outer covering because of low surface tension and the Teflon can easily handle the temperature produced by the thermistors.

In other embodiments, the PTC thermistors 42 may be used at other locations where blockage of ports might affect operational capabilities. For example, the PCT thermistors may be used in conjunction with the static ports 26 as well as with pitot tubes located at various other locations, such as jet engine intake.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

## Claims

1. An air intake port heating system comprising:
a port for sensing at least one of dynamic or static air pressure; and
one or more positive temperature coefficient thermistors located in proximity to the port.

2. The system of Claim 1, wherein the port is a pitot tube.

3. The system of Claim 1, wherein the one or more thermistors comprise two or more thermistors connected in parallel.

4. The system of Claim 3, wherein the thermistors include two leads, one of the leads of the thermistors are connected to the ground and the other lead is connected to a power supply.

5. The system of Claim 4, wherein the lead is connected to ground through the port.

6. The system of Claim 5, wherein the system is included in an aircraft and the port is connected to aircraft ground.

7. The system of Claim 5, further comprising a switch connected between the power supply and the two or more thermistors.

8. The system of Claim 1, further comprising a sleeve configured to maintain heat produced by the thermistors in proximity to the port.

9. The system of Claim 8, where the sleeve includes Teflon.

10. The system of Claim 1, wherein the set point for the one or more thermistors is greater than 0° C, wherein the thermistors are bonded to the port with a thermally conductive adhesive.
